# EUROPEAN PATENT APPLICATION

(11) **EP 1 618 966 A1**
(43) Date of publication of application: **25.01.2006**
(21) Application number: 05005642.3
(22) Date of filing: 15.03.2005
(51) Int. Cl.: B05D 1/28, B32B 37/00, B44C 1/17

(54) **Apparatus for manufacturing a film that can be used to apply varnish and colour onto an ogject**

(30) Priority: 23.07.2004 WO PCT/US20/04023682; 22.02.2005 WO PCT/US20/05005522
(71) Applicant: DeMaxz Deutschland GmbH, 20354 Hamburg (DE)
(72) Inventor: Zaher, maximilian DeMaxZ Technologies AG, 6300 Zug (CH)
(74) Representative: von Hellfeld, Axel

(57) **Abstract**

An apparatus for manufacturing a film (16c) that can be used to apply varnish and colour onto an object, said apparatus comprising:
- a varnish application station (36) for applying a layer (12) of varnish onto a first film (10), said first film (10) having release properties,
- a first curing station (40) for partially curing said layer (12) of varnish,
- a supply cylinder (42) for supplying a second film (16), said second film (16) being more flexible than said first film (10),
- a transfer station (44) for transferring by release at least said layer of varnish from said first film (10) to said second film (16), and
- a second curing station (52) for further curing said layer (12) of varnish.

## Description

The invention is concerned with an apparatus for manufacturing a film that can be used to apply colour and varnish to an object to be decorated.

The object to be decorated may, for example, be made from wood or a wood-like material, or the object may be made from plastics or the like. Objects made of metal can also be covered with colour and varnish by means of a film according to the present invention. Furthermore, objects made of glass or ceramic material can be decorated with colour and varnish by means of a film according to the present invention.

Films having so-called release properties are well known in the prior art; see for example, EP 1 053 793 A1 and EP 0 573 676 B1. The prior art includes both paper-based films and films made of a resin, the surfaces of which are prepared such that the film comprises release properties. When layers of colour or varnish are applied to such a film having release properties, the layers can be transferred onto a object to be decorated in such a way that the layers of varnish or colour are peeled off from the film.

The prior art according to EP 0 573 676 B1 discloses a process of decorating an object wherein a layer of varnish is applied on a film having release properties. That layer of varnish is partially cured. A layer of colour is applied onto the partially cured varnish layer and a second layer of varnish is applied onto the colour layer. Said second layer of varnish is also partially cured. Thereafter, said layers of varnish and colour, respectively, are transferred onto the object to be decorated (the "substrate"). After said transfer by release, the first and second varnish layers are completely cured. The term "curing" used herein is also called "cross linking".

EP 1 053 793 A1 teaches the application of varnish and colour onto an object by means of a release film, wherein a glue is applied on top of the varnish layers and colour layers of the release film. When transferring said layers onto the object to be decorated, the glue is in direct contact with said object.

The prior art also knows a process of manufacturing a film that can be used to apply colour and varnish onto an object to be decorated wherein a first film comprising release properties is printed with a colour layer and, thereafter, that colour layer is transferred by release onto another film comprising release properties. Said other film is more flexible than said first film.

It is an object of the present invention to provide an apparatus for manufacturing a film that can be used to apply colour and varnish onto an object to be decorated, wherein the colour and varnish comprise very good cohesion properties on the decorated object.

To this end, the present invention teaches an apparatus for manufacturing a film that can be used to apply varnish and colour onto an object, said apparatus comprising:
- a varnish application station (36) for applying a layer (12) of varnish onto a first film (10), said first film (10) having release properties,
- a first curing station (40) for partially curing said layer (12) of varnish,
- a supply cylinder (42) for supplying a second film (16), said second film (16) being more flexible than said first film (10),
- a transfer station (44) for transferring by release at least said layer of varnish from said first film (10) to said second film (16), and
- a second curing station (52) for further curing said layer (12) of varnish.

According to a preferred embodiment of the invention, the first film comprises a colour layer. Said colour layer may be on top of the varnish layer or underneath said varnish layer, i.e. in direct contact with the first film. According to another preferred embodiment, a heating station, preferably a heating station using IR-radiation (Infra-Red), is arranged between said varnish application station and said first curing station. In this regard, the term "between" refers to the direction of movement of the first film through the apparatus, e.g. from a supply cylinder for said first film to the transfer station. According to other preferred embodiments of the invention, said first film is made of polypropylene, whereas said second film is made of polyolefine, polyethylene, or PVC.

Said partial curing in said first curing station is preferably performed by UV-sources emitting UV-radiation. Also, said complete curing of the varnish in said second curing station is, preferably, performed by UV-sources emitting UV-radiation.

According to a preferred embodiment of the invention, said first film is made of polypropylene. Polypropylene films are relatively stiff, as compared to other films known in the prior art as having release properties. On the other hand, a colour decoration can typically be printed on a polypropylene film with very good quality. Where three-dimensional objects, in particular, are to be decorated using a release film, the relative stiffness (non flexibility) of the polypropylene films can cause problems. According to the present invention, therefore, the colour layer and the varnish layer (which is applied onto the colour layer or underlying the colour layer) are transferred, via release technique, onto another film comprising release properties, wherein said other film is relatively more flexible than said polypropylene film. In this way, the colour layer and the varnish layer can be transferred from said more flexible film with high quality onto a three-dimensional object, including the edges or recesses in said object.

The colour most suitable for the present invention is selected as a UV-resistant dispersion colour. Preferably, 10 g (wet) are applied per m² (3 g dry).

Also, sublimable dispersion colours can be used for said colour layer.

The varnish to be used is known in the prior art, e.g. a varnish based on alkyl-urethane-resin.

The product obtained by means of the apparatus according to the present invention is a film that can be used to apply colour and varnish onto an object to be decorated. The product is a film which can be manufactured and sold. It can be used by the customer e.g. in an apparatus using a membrane by which the film is pressed against the three-dimensional object to be decorated, as disclosed in EP 0 282 859 B1.

Also, the film manufactured by means of the apparatus according to the present invention can be used in an injection moulding machine.

In the following, the present invention is first described generally with respect to the process for manufacturing a film that can be used to apply varnish and colour onto an object in order to better understand the apparatus according to the present invention that is described thereafter.

Figures 1 to 4 illustrate a first embodiment of a process of manufacturing a film that can be used to apply colour and varnish onto an object and figures 5 to 8 illustrate another embodiment of such a process.

Figure 9 illustrates an apparatus according to the present invention for manufacturing a film that can be used to apply varnish and colour onto an object.

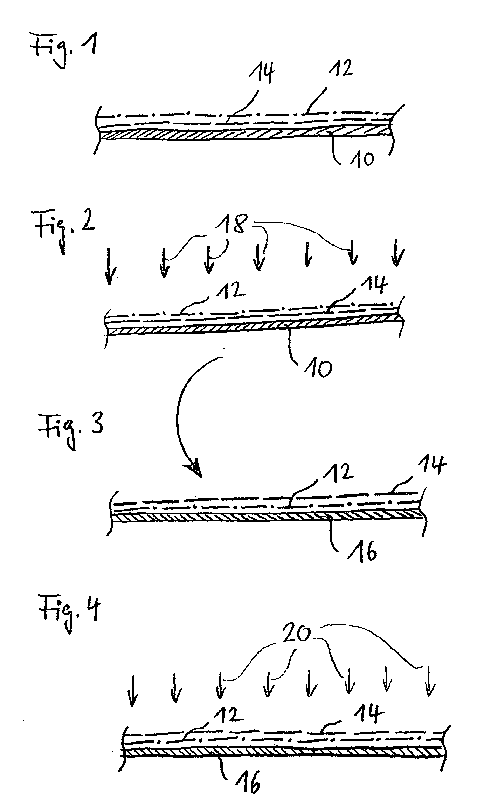

According to Figure 1, a first film 10 of polypropylene is printed with a layer 14 which comprises a colour decoration. Said printing process as such is known in the art.

Thereafter, a layer 12 of a varnish is applied onto said layer 14 of colour. These two steps result in the product shown in Figure 1.

Thereafter, UV-radiation 18 indicated by arrows in Figure 2 is directed onto said film 10 carrying the layers of colour (14) and varnish (12). The intensity of the UV-radiation is controlled such that the varnish is not completely cured (cross-linked) but only partially, i.e. the varnish is still relatively soft. The degree of remaining softness of the varnish can be adjusted by the amount of UV-radiation and will depend on the particular requirements that the final product film must fulfil, and may depend on the dimensions and shape of the object eventually to be decorated. As an example, the partial curing can be obtained by a radiation of 80 watt/cm².

After said partial curing of the varnish layer 12, the layers of varnish and colour are immediately, preferably without any time delay, transferred by release-technique onto another, second film 16 which also has release properties. The result of that transfer is shown in Figure 3, i.e. the layer 12 of varnish is in direct contact with the film 16 whereas the colour layer is on top of the varnish layer.

After said transfer, the layer of varnish is completely cured by means of UV-radiation 20 as indicated in Figure 4. The complete curing (cross-linking) may be obtained e.g. by applying 120 watt/cm². The transfer from the first to the second film can be eased by applying a pressure of 1 to 2 bar and an elevated temperature of 120 to 180°C.

Thereafter, the film 16 comprising the colour layer 14 and the completely cured varnish layer 12 can be used for decorating a product. That decoration may be performed in accordance with prior art techniques, i.e. the layers of varnish and colour are transferred by release onto the object, e.g. in accordance with EP 0 573 676 B1 (wherein said object is called a "substrate"). In accordance with the present invention, however, the complete curing, i.e. the complete cross-linking is not performed on the decorated object, i.e. the object carrying the colour layer and varnish layer. Rather, according to the present invention, the complete curing is performed on the film 16 comprising the release properties. Thereafter the decoration is transferred from that film onto the object.

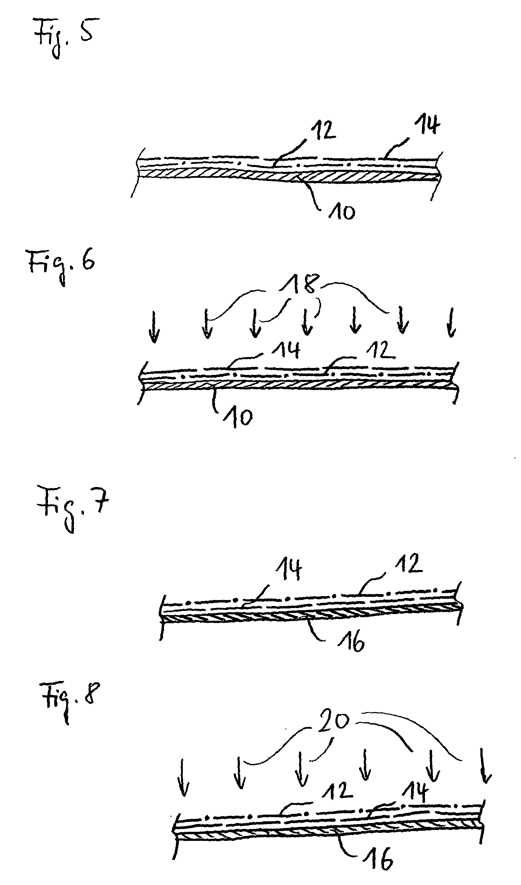

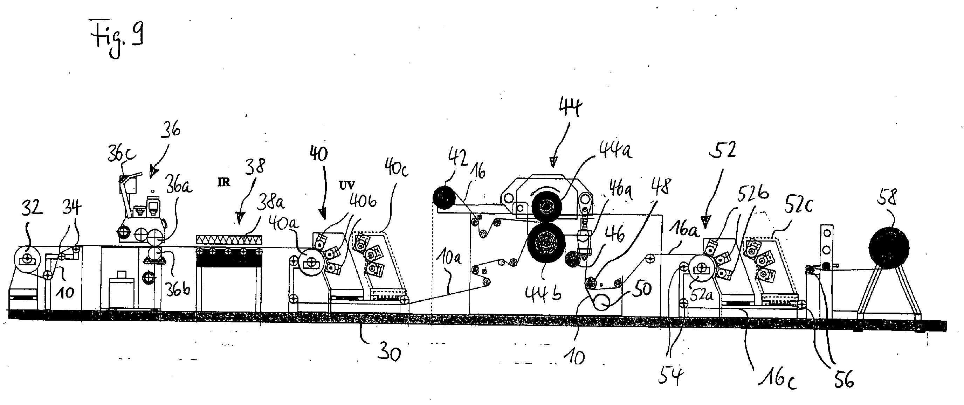

Figures 5 to 8 show another embodiment of the present invention in which the layers comprise the same reference numerals as in Figures 1 to 4.

Different from Figures 1 to 4, Figures 5 to 8 illustrate a process wherein the layer 12 of varnish is applied first onto the polypropylene film 10. Thereafter, the layer 14 of colour is applied onto the layer 12 of varnish. This results in the product shown in Figure 5.

Thereafter, according to Figure 6, UV-radiation 18 is applied onto the layer of varnish such that it is partially cured, similar to the embodiment shown in Figure 2. After partial curing said varnish layer 14, both the colour layer 12 and the varnish layer 14 are transferred by release technique onto another film 16 having release properties, such that the varnish layer 12 is covering the colour layer 14. Complete curing by UV-radiation 20 is illustrated in Figure 8. The final product illustrated in Figure 8 is a film 16 ready for decorating an object, as described above in more detail in connection with the embodiment shown in Figures 1 to 4.

The embodiments illustrated in Figures 1 to 8 can be modified such that more than one colour layer is applied and more than one varnish layer is applied. For example, in the steps illustrated in Figures 1 and 2 as well as Figures 5 and 6, respectively, more than one varnish layer and/or more than one colour layer can be applied onto the film 10. Important is that, in accordance with the invention, the at least one varnish layer is partially cured on the polypropylene film before it is transferred to the more flexible second film 16 illustrated in Figure 3, 4 and 7, 8, respectively.

Figure 9 illustrates an apparatus for performing both of the afore-mentioned methods of manufacturing a film that can be used to apply varnish and colour onto an object.

According to Figure 9, on a base 30 various stations are arranged to perform the necessary steps to obtain said film.

A supply cylinder 32 is provided for supplying a printed first film 10. For example, that first film 10 may be already printed with a layer 14 of colour in accordance with Figures 1 to 4. In other words, the supply cylinder 32 in Figure 9 supplies a film 10 carrying a layer 14 of colour. The film 10 is advanced, via rollers 34, into a varnish application station 36. In said varnish application station 36, a layer 12 (see Figure 1) is applied onto said layer 14 of colour. The varnish application station 36 comprises rollers 36a, 36b for applying the varnish onto the film. Such application rollers are known as such in the prior art. A varnish supply 36c is also indicated schematically in Figure 9.

In that varnish application station 36, varnish is applied onto the film so that the film is completely covered with varnish, the colour layer being underneath the varnish. Thereafter, the film is advanced to a heating station 38 in which the varnish is gently heated such that the varnish is more homogeneously distributed on the film. For said heating, IR-sources 38a are used.

After passing said heating station 38, the film is advanced to a first curing station 40.

The first curing station 40 comprises larger roller 40a on which the film is advanced in Figure 9 from the left-hand side to the right-hand side. Radially with regard to said roller 40a, UV-sources 40b are arranged for partially curing said varnish on said film 10. In a preferred embodiment, said partial curing is obtained by applying less than 50 watt/cm². The roller 40a is preferably cooled by water.

The UV-sources 40b are fixed on a carriage 40c which can be moved from the position shown in full lines in the Figure to the position shown in dashed lines. The left-hand position, shown in full lines, is the operating position.

After passing the first curing station 40, the film 10a carrying the partially cured varnish, is advanced to a transfer station 44.

The transfer of the varnish layer and the colour layer by means of the transfer rollers 44a, 44b is promoted by applying a pressure of 1 to 2 bar between said rollers and also an elevated temperature in the range of 120°C to 180°C, depending on the material of the film being used.

A supply cylinder 42 for supplying a second film 16 is also arranged near said transfer station 44 in order to supply the second film into that transfer station. The transfer station 44 comprises transfer rollers 44a and 44b in order to transfer both the varnish layer and the colour layer from the first film 10a onto the second film 16. As explained above, the second film 16 is more flexible than the first film 10a. Because the first film 10a has released properties, the colour layer and the partially cured varnish layer are transferred by release from the first film onto the second film. This technique of release transfer is known as such in the art. After that transfer, both the first and second film are advanced in common via a roller 46 and another roller 46a to a separating roller 48. At the separating roller 48, the first film 10 is separated from said second film 16a such that the second film 16a carrying the layer of colour and the layer of varnish is advanced to a second curing station 52, whereas the first film 10 is collected at a collecting roller 50.

In the second curing station 52, the varnish layer on said second film 16a is completely cured by UV-radiation provided by UV-lamps 52b. The UV-lamps are arranged on a carriage 52c which can be moved into a non-operating position indicated by dashed lines in the Figure. The complete curing of the varnish is preferably obtained by applying 120 watt /cm², depending on the varnish that is used.

After the complete curing of the varnish in the second curing station 52, the completed film 16c is advanced via rollers 56 onto a collecting cylinder 58. On connecting cylinder 58, a complete product is ready for shipment to a customer that can use the film for applying varnish and colour onto an object by release technique because said second film 16 also comprises release properties.

## Claims

1. Apparatus for manufacturing a film (16c) that can be used to apply varnish and colour onto an object, said apparatus comprising:
- a varnish application station (36) for applying a layer (12) of varnish onto a first film (10), said first film (10) comprising release properties,
- a first curing station (40) for partially curing said layer (12) of varnish,
- a supply cylinder (42) for supplying a second film (16), said second film (16) being more flexible than said first film (10),
- a transfer station (44) for transferring by release at least said layer of varnish from said first film (10) to said second film (16), and
- a second curing station (52) for further curing said layer (12) of varnish transferred to said second film.

2. Apparatus according to claim 1, wherein said first film (10) comprises a colour layer (14).

3. Apparatus according to one of the claims 1 or 2, wherein a heating station (38) is arranged between said varnish application station (36) and said first curing station (40).

4. Apparatus according to claim 1, wherein said first film (10) is made of polypropylene.

5. Apparatus according to claim 1, wherein said second film is made of polyolefine, polyethylene, or PVC.

6. Apparatus according to claim 1, wherein said first curing station (40) comprises UV-sources.

7. Apparatus according to claim 1, wherein said second curing station comprises UV-sources.
